# EUROPEAN PATENT SPECIFICATION

(11) **EP 1 876 040 B1**
(45) Date of publication and mention of the grant of the patent: **13.05.2009**
(21) Application number: 07111126.4
(22) Date of filing: 27.06.2007
(51) Int. Cl.: B60D 1/46

(54) **Tractor hitch for trailer**
Traktoranhängerkupplung
Crochet de tracteur pour remorque

(30) Priority: 04.07.2006 IT MO20060217
(43) Date of publication of application: 09.01.2008
(73) Proprietor: CBM S.p.A., 41100 Modena (IT)
(72) Inventor: Cornia, Omero, 41100 Modena (IT)
(74) Representative: Modiano, Micaela Nadia

(56) References cited:
- EP-A- 0 184 489
- DE-A1- 19 953 833
- FR-A- 2 729 816
- GB-A- 2 289 834
- GB-A- 2 380 720
- US-A- 2 916 300

## Description

The present invention relates to a tractor hitch for a trailer, i.e., to a device to be applied to a tractor in order to allow its coupling to the trailer for towing.

The background art mainly comprises trailer hitches such as the ones provided in genericEP-013 8519 A3 and in genericGB-23 80720 B, both of which relate to hitches provided with an articulated quadrilateral which is constituted by two pairs of external articulated arms which are interposed between the frame which is fixed to the tractor (fixed part) and the towhook or towbar (movable part): each hitch is therefore constituted by a fixed part and a movable part, which are interconnected by a corresponding articulated quadrilateral.

The stated purpose of the first hitch is to allow the driver to view the area where coupling of the end of the hitch element of the tractor (towhook or towbar) is to occur, i.e., the area where the eyelet-shaped end of the drawbar of the trailer which rests on the ground is located; the stated purpose of the second hitch is to reduce the space occupation of the hitch for the trailer in the region of the lifting unit of the tractor, so that the hitch does not interfere with the hydraulic three-point hitch.

In both hitches, which are indeed structurally equivalent, the two pairs of articulated arms necessarily have a different length, which is shorter than the length of the rearward pair of articulated arms and greater than the length of the pair of articulated arms that lies further forward toward the towing element. Both pairs of articulated arms are external with respect to the side walls of the fixed part and therefore are not protected and are dangerous.

To move such towhook or towbar, for the transition from the closed position, for example horizontally and consequently to the lowered active position, in both hitches there is a hydraulic piston (which of course replaces the traditional pair of tension elements), which is pivoted at the rear to the fixed part and at the front, with its stem, to the movable part, in order to impart to the movable part a composite movement of forward elongation and angular downward motion, so that the towhook or towbar reaches the position, which is spaced further from the tractor for visibility from the cabin and on the ground, which is needed in order to perform coupling to the eyelet of the trailer even in a position below ground level.

In order to lock the hitch when it returns to the closure position, i.e., the inactive position (which is for example horizontal), the free end of the movable part is retained within the fixed part by means of a pair of hooks.

Toward the end of the description of GB-2380720 A, the alternative possibility arises of connecting the end of the stem of the hydraulic piston also to other parts, such as one or more of the articulated arms, but it is acknowledged that it is necessary to renounce the benefit of complete containment of the movable part in the subframe (which is box-like on three sides) which forms the fixed part; this is due to the consequent increase in lateral space occupation caused by the expected connection of the hydraulic piston to the other parts, such as one or more of the (external) articulated arms.

This background art has considerable drawbacks because such articulated quadrilateral structure with two pairs of external arms and an internal piston whose stem is pivoted in the part for accommodating the towhook or towbar, therefore beyond the longest pair of external articulated arms, is not functionally and economically convenient, since this is a very long, bulky and transversely unstable structure which is subject to vibration, warping and intense stresses, which entail an onerous oversizing in order to attenuate these drawbacks by providing some mechanical contrast.

This leads to the need to solve the problem of reducing space occupation, instability, vibration, warping and costs without renouncing complete retraction of the movable part into the fixed one.

The present invention solves the above mentioned problem by adopting, for the longer articulation interposed between the fixed part and the movable part, a single articulated arm in a central position, the front end of an actuator of any suitable type being pivoted at said single articulated arm, in the lower pivot for its connection to the movable part, or proximate to said pivot; as regards the pair of articulated arms, it is interposed in a protected and stiffened manner between the movable part and the fixed part. Moreover, for the sake of higher safety in the closed position, the movable part retracts completely into the fixed one and is anchored thereto at the front and at the rear.

The advantages obtained by the present invention are increased stability and reduction of manufacturing costs, space occupation, vibration, stresses and warping, due to the compaction that is achieved by reducing the length of the actuator and the number of the articulated arms from four to three, pivoting the end of the actuator to the single articulated arm; the possibility of transverse stiffening of said pair of links, which is constituted by their particular interposition between the fixed part and the movable part (in a transverse direction); and assurance of correct operation. Moreover, the advantageous complete accommodation of the movable part of the hitch within the fixed part, with front and rear anchoring, is also achieved.

The embodiment of the invention, for example in the horizontal closed position, is shown in the accompanying drawings, wherein:

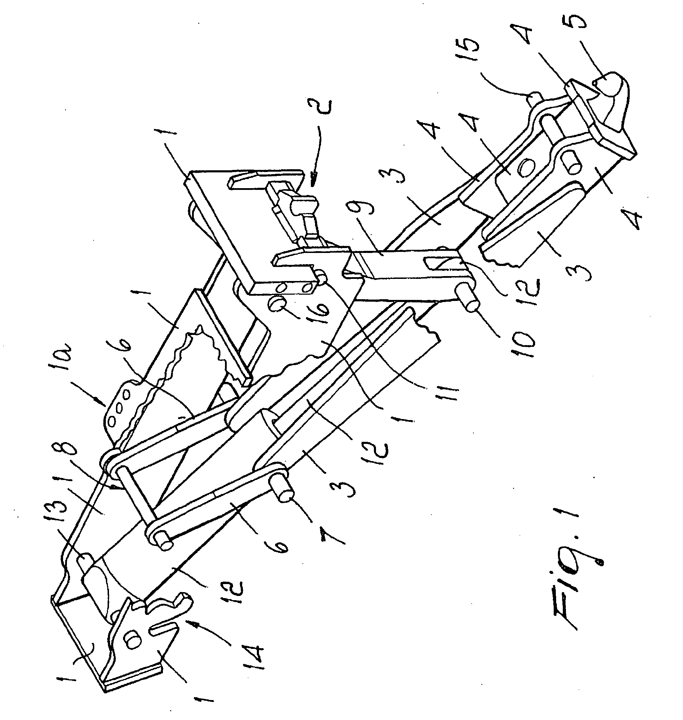

Figure 1 is a partially sectional perspective view of the tractor hitch for trailer in a situation in which opening has occurred in order to allow coupling to the eyelet of the trailer (not shown);
Figure 2 is a partially sectional perspective view of the same hitch as in Figure 1, but in the closed (towing) position, with complete accommodation of the movable part within the fixed part;
Figure 3 is a partial longitudinal vertical sectional view of Figure 1, to highlight the pivoting of one end of the actuator to the articulation pivot of the single longer arm inside the movable part, in a possible configuration thereof;

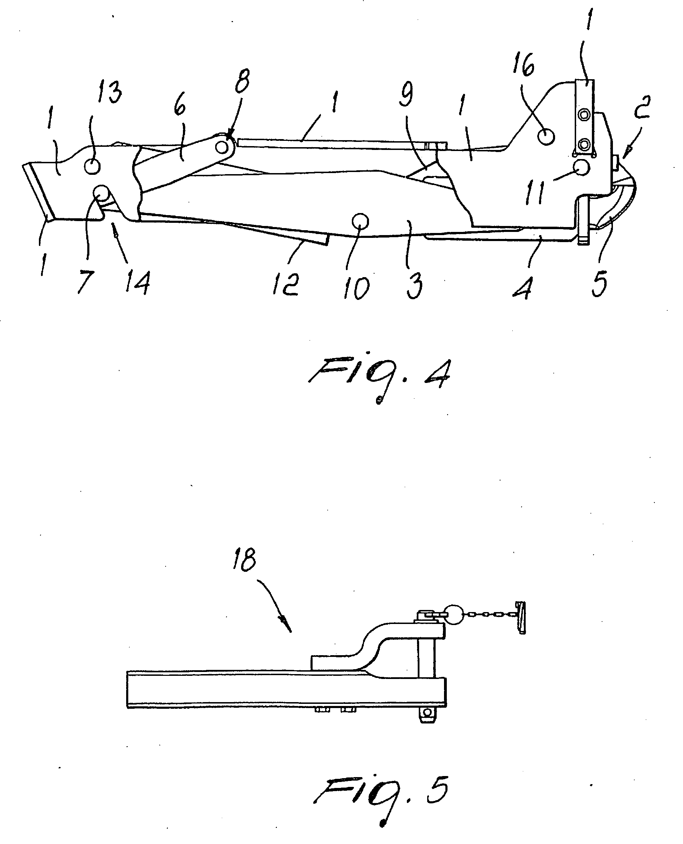

Figure 4 is a partial longitudinal sectional view of Figure 2;
Figure 5 is a side view of a towbar as a towing element as an alternative to the towhook shown fitted in the preceding figures;
Figure 6 is a sectional view which is similar to Figure 3, but in the case of articulated coupling of one end of the actuator to a point of the single longer arm, which is different from the lower one;
Figure 7 is an enlarged-scale and partially sectional perspective view of the detail of the pair of rear links;
Figure 8 is an enlarged-scale sectional view of the upper connection for stiffening said pair of shorter links.

With reference to the figures, a fixed part 1, which is substantially box-like, is constituted by a pair of side walls and by various elements for mutually connecting them, which include the upper flange provided with perforated parts 1a for fixing to the tractor: at the front, said fixed part ends with a protruding element 2 for retaining the upward motion of the eyelet of the drawbar. The movable part, mainly constituted by a pair of longitudinal members 3 which lies inside the pair of side walls of the fixed part 1, ends with a structure 4 for accommodating a towing element 5 or another suitable element. A pair of rear articulated arms 6, or shorter links, is external to the pair of longitudinal members 3 of the movable part but internal with respect to the side walls of the fixed part 1: the pair of rear articulated arms 6 is pivoted in a lower region, on the pair of pivots which have lateral protrusions 7, to the pair of longitudinal members 3 and, in an upper region, on a pivot 8 which is supported on the side walls of the fixed part 1.

The single articulated arm 9, which lies inside the pair of longitudinal members 3, i.e., is central, and is longer than each of the links 6, has in the figure a forward-facing concave profile, the shape of which depends, however, on design coordination: accordingly, it may have another shape: linear, arc-like, split or mixed-line; said single articulated arm is pivoted at one of its ends in the pair of longitudinal members 3 by means of a pivot 10 and, at the other end, by means of a pivot 11, to the side walls of the fixed part 1. Advantageously, one end of the actuator 12 is pivoted in the central part of the pivot 10 and the opposite end of the actuator is coupled rotationally to the side walls of the fixed part 1 by means of a pivot 13.

The outer ends of the pair of pivots 7 for the articulation of the pair of links 6 to the pair of longitudinal members 3, in their rearmost angular position, are anchored at the rear to the pair of curves 14 of the side walls of the fixed part 1 in the closed position.

The reference numeral 15 designates a pair of lateral protrusions of the front part 4 for accommodating the towing element (5 or others), for front anchoring, upon closure, by means of a pair of hooks 17 which are pivoted to the front pivot 16 of the side walls of the fixed part 1 and are coupled to said pair of lateral protrusions.

Instead of the hook 5, the towing element can be constituted by the towbar 18.

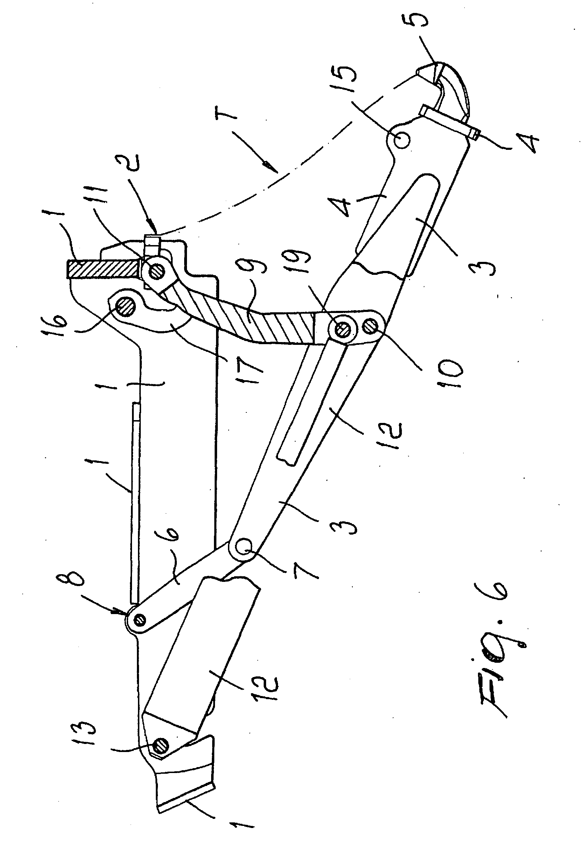

In Figure 6, according to a possible alternative solution, one end of the actuator 12 is pivoted to the single articulated arm 9 by means of the auxiliary pivot 19 which lies above the pivot 10.

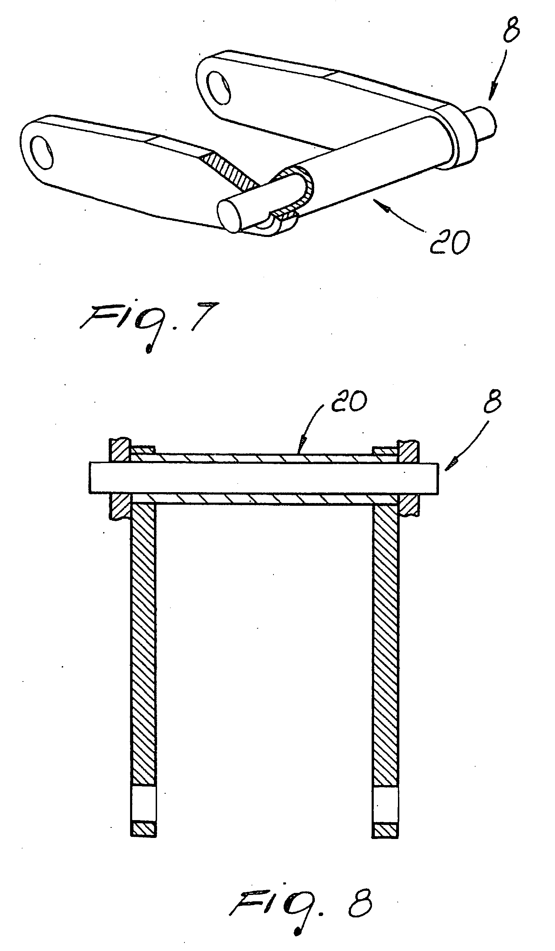

Figures 7 and 8 are respectively a perspective view and an orthographic projection view of the pair of links 6 stiffened by means of a sleeve 20 which is welded to, or passes through, said links.

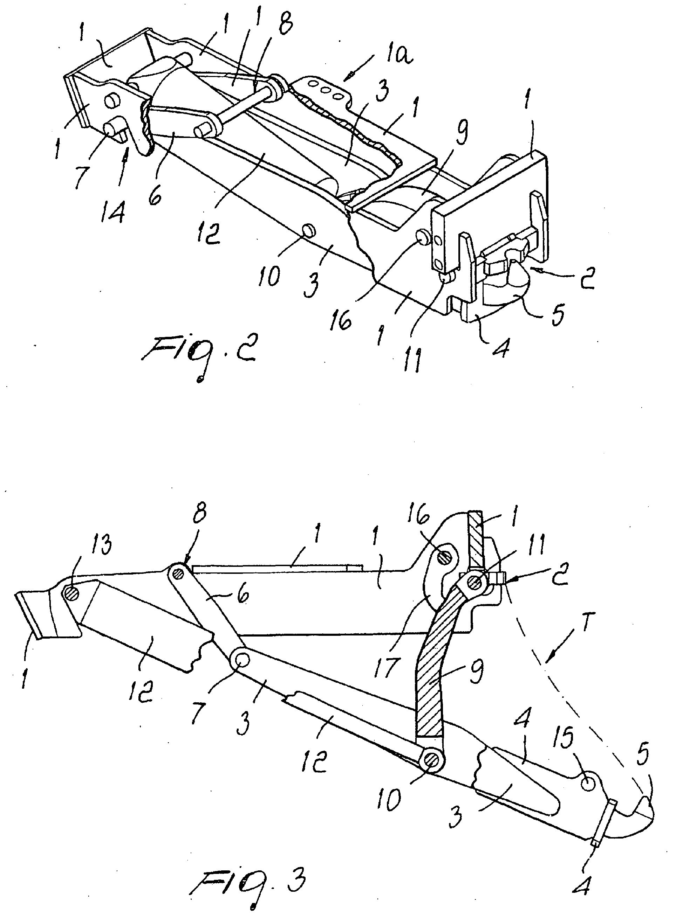

A possible path T of the tip of the hook 5 for transition from the closed position to the open position is shown in broken lines in Figure 3.

In the practical embodiment, the materials, dimensions, constructive details, shapes and arrangements of the individual structural elements may be different from the ones described but technically equivalent thereto.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tractor hitch for trailer, comprising a fixed part (1) for connection to the tractor, a movable part (3) provided at the end (4) with a towhook (5) or towbar (18), said movable part being pivoted to said fixed part by means of an articulated quadrilateral which has rear articulated arms (6) which are actuated by means of a hydraulic piston in elongation and angularly with retraction of said movable part into the fixed part (1) in the closed position and locking by means of a pair of hooks (17), **characterized in that** the front articulation of said quadrilateral is constituted by a single central articulated arm (9) which is longer than the rear articulated arms, and, which is pivoted in an upper region to the fixed part (1) and in a lower region to the movable part (3), the front end of the hydraulic piston (12) being pivoted to the movable part (3) at the pivot (10) of the articulated arm (9) or proximate to said pivot (10).

2. The hitch according to claim 1, **characterized in that** said front end of the actuator (12) is pivoted by means of said pivot (10) in which the lower end of said single articulated arm (9) is pivoted to the movable part (3).

3. The hitch according to claim 1, **characterized in that** said front end of the actuator (12) is pivoted to said single articulated arm (9) by means of a pivot (19) which is different from the pivot (10) to which the lower end of said single articulated arm (9) is pivoted.

4. The hitch according to one of claims 1, 2 and 3, **characterized in that** said pair of shorter rear articulated arms (6) is interposed between the side walls of said fixed part and the longitudinal members of said movable part.

5. The hitch according to claim 4, **characterized in that** the upper pivot (8) of the pair of rear articulated arms or links (6) is internal with respect to a stiffening sleeve (20), which rigidly interconnects said articulated arms.

6. The hitch according to one of claims 1, 2 and 3, **characterized in that** outer bilateral protrusions (7) of the pair of pivots for the coupling of the lower end of the pair of rear articulated arms (6) to the longitudinal members of the movable part, in the rearmost angular position of said movable part, are accommodated and anchored in a pair of curves (14) with which the pair of side walls of the fixed part (1) is provided in its rear part.

7. The hitch according to claim 6, **characterized in that** the terminal receptacle (4) of said pair of side walls of the movable part (3) is provided, in its front part, with a pair of lateral protrusions (15) for anchoring therein the pair of hooks (17) in the closed position.

## Patentansprüche

1. Traktorkupplung für Anhänger mit einem festen Teil (1) zur Verbindung mit dem Traktor und einem beweglichen Teil (3), das an dem Ende (4) mit einem Abschlepphaken (5) oder einer Abschleppstange (18) versehen ist, wobei das bewegliche Teil an dem festen Teil mittels eines Viereckgelenks angelenkt ist, das hintere Gelenkarme (6) aufweist, die in Längsrichtung durch einen hydraulischen Kolben und winkelmäßig durch Rückziehen des beweglichen Teils in das feste Teil (1) in die geschlossene Position betätigt und mittels eines Paares von Haken (17) verriegelt werden,
**dadurch gekennzeichnet, dass** das vordere Gelenk des Viereckgelenks durch einen einzigen mittleren Gelenkarm (9) gebildet wird, der länger ist als die hinteren Gelenkarme und der in einem oberen Bereich des festen Teils (1) und in einem unteren Bereich des beweglichen Teils (3) angelenkt ist, wobei das vordere Ende des hydraulischen Kolbens (12) an dem beweglichen Teil (3) an der Anlenkachse (10) des Gelenkarms (9) oder in der Nähe der Anlenkachse (10) angelenkt ist.

2. Kupplung nach Anspruch 1, **dadurch gekennzeichnet, dass** das vordere Ende des Betätigungsgliedes (12) mittels der Anlenkachse (10) angelenkt ist, in der das untere Ende des einzigen Gelenkarms (9) an dem beweglichen Teil (3) angelenkt ist.

3. Kupplung nach Anspruch 1, **dadurch gekennzeichnet, dass** das vordere Ende des Betätigungsgliedes (12) an dem einzigen Gelenkarm (9) mittels einer Anlenkachse (19) angelenkt ist, die sich von der Anlenkachse (10) unterscheidet, an der das untere Ende des einzigen Gelenkarms (9) angelenkt ist.

4. Kupplung nach einem oder mehreren der Ansprüche 1, 2 oder 3, **dadurch gekennzeichnet, dass** das Paar von kürzeren hinteren Gelenkarmen (6) zwischen den Seitenwänden des festen Teils und den Längsgliedern des beweglichen Teils angeordnet ist.

5. Kupplung nach Anspruch 4, **dadurch gekennzeichnet, dass** die obere Anlenkachse (8) des Paares von hinteren Gelenkarmen oder Gelenkverbindungen (6) gegenüber einer Versteifungshülse (20), die die Gelenkarme fest miteinander verbindet, innen angeordnet ist.

6. Kupplung nach einem oder mehreren der Ansprüche 1, 2 oder 3, **dadurch gekennzeichnet, dass** äußere beiderseitige Vorsprünge (7) des Paares von Anlenkachsen zum Koppeln des unteren Endes des Paares von hinteren Gelenkarmen (6) mit den Längsgliedem des beweglichen Teils in der hintersten Winkelposition des beweglichen Teils in einem Paar von Kurven (14) angeordnet und verankert sind, mit denen das Paar von Seitenwänden des festen Teils (1) in seinem hinteren Bereich versehen ist.

7. Kupplung nach Anspruch 6, **dadurch gekennzeichnet, dass** die Endbuchse (4) des Paares von Seitenwänden des beweglichen Teils (3) in ihrem vorderen Bereich mit einem Paar von lateralen Vorsprüngen (15) versehen ist, um das Paar von Haken (17) in der geschlossenen Position darin zu verankern.

## Revendications

1. Attelage de tracteur pour remorque, comprenant une partie fixe (1) pour la liaison au tracteur, une partie mobile (3) munie, à l'extrémité (4), d'un crochet (5) ou d'une barre (18) de remorquage, ladite partie mobile étant montée pivotante sur ladite partie fixe par l'intermédiaire d'un quadrilatère articulé qui a des bras articulés arrière (6) qui sont actionnés par l'intermédiaire d'un piston hydraulique en allongement et angulaire-ment avec rentrée de ladite partie mobile dans la partie fixe (1) dans la position fermée et blocage par l'intermédiaire d'une paire de crochets (17), **caractérisé en ce que** l'articulation avant dudit quadrilatère est constituée par un unique bras articulé central (9), qui est plus long que les bras articulés arrière, et qui est monté pivotant dans une zone supérieure sur la partie fixe (1) et dans une zone inférieure sur la partie mobile (3), l'extrémité avant du piston hydraulique (12) étant montée pivotant sur la partie mobile (3) au niveau du pivot (10) du bras articulé (9) ou à proximité dudit pivot (10).

2. Attelage selon la revendication 1, **caractérisé en ce que** ladite extrémité avant de l'actionneur (12) est montée pivotante par l'intermédiaire dudit pivot (10) dans lequel l'extrémité inférieure dudit bras articulé unique (9) est montée pivotante sur la partie mobile (3).

3. Attelage selon la revendication 1, **caractérisé en ce que** ladite extrémité avant de l'actionneur (12) est montée pivotante sur ledit bras articulé unique (9) par l'intermédiaire d'un pivot (19) qui est différent du pivot (10) sur lequel l'extrémité inférieure dudit bras articulé unique (9) est montée pivotante.

4. Attelage selon l'une des revendications 1, 2 et 3, **caractérisé en ce que** ladite paire de bras articulés arrière plus courts (6) est disposée entre les parois latérales de ladite partie fixe et les éléments longitudinaux de ladite partie mobile.

5. Attelage selon la revendication 4, **caractérisé en ce que** le pivot supérieur (8) de la paire de bras ou de liaisons arrière articulés (6) est interne par rapport à une douille de renfort (20), qui relie de manière rigide lesdits bras articulés.

6. Attelage selon l'une des revendications 1, 2 et 3, **caractérisé en ce que** des saillies bilatérales externes (7) de la paire de pivots pour l'accouplement de l'extrémité inférieure de la paire de bras articulés arrière (6) aux éléments longitudinaux de la partie mobile, dans la position angulaire la plus arrière de ladite partie mobile, sont logés et ancrés dans une paire d'encoches courbes (14) dont la paire de parois latérales de la partie fixe (1) est munie dans sa partie arrière.

7. Attelage selon la revendication 6, **caractérisé en ce que** le réceptacle terminal (4) de ladite paire de parois latérales de la partie mobile (3) est muni, dans sa partie avant, d'une paire de saillies latérales (15) pour ancrer dans celle-ci la paire de crochets (17) dans la position fermée.
